Europäisches Patentamt

European Patent Office

Office européen des brevets

(11) Publication number : **0 590 889 A2**

# EUROPEAN PATENT APPLICATION

(21) Application number : 93307563.2

(22) Date of filing : 23.09.93

(51) Int. Cl.⁵ : **C08G 18/67,** C08G 18/32,
C09D 175/04, C08F 299/06

(30) Priority : 23.09.92 GB 9220143

(43) Date of publication of application :
06.04.94 Bulletin 94/14

(84) Designated Contracting States :
BE DE ES FR GB IT SE

(71) Applicant : SERICOL LIMITED
Westwood Road
Broadstairs, Kent CT10 2PA (GB)

(72) Inventor : Gould, Nigel Paul
12 The Hawthorns
Broadstairs, Kent (GB)

(74) Representative : Claisse, John Anthony, Dr.
97 Portway
Wells Somerset BA5 2BR (GB)

(54) Urethane acrylates and methacrylates and compositions containing them.

(57)    Ionomeric urethane acrylates and methacrylates including units derived from at least one isocyanurate, and radiation curable compositions containing such acrylates and methacrylates in admixture with water. The ionomeric nature of the acrylates and methacrylates confers aqueous solubility over wide concentration ranges, thereby enabling compositions containing them to contain and be diluted with water.

EP 0 590 889 A2

## COMPOUNDS AND COMPOSITIONS

This invention concerns urethane acrylates and methacrylates, and compositions containing them.

Urethane acrylates and methacrylates have been used hitherto in the preparation of various types of radiation curable coating compositions, for example inks and varnishes. In order to reduce the coating weight of such compositions, it has been necessary to add a solvent. However, organic solvents are environmentally undesirable, and compositions have therefore been proposed hitherto which can be diluted with water.

In order to confer water miscibility on coating compositions, it has been proposed hitherto to use hydrophylic oligomers, the oligomers subsequently being cured. Such coatings adhere well to many plastics and paper materials, but their use on polyvinyl chloride substrates has been limited as a result of poor adhesion. It has been proposed to increase the adhesion of such compositions to polyvinyl chloride substrates by the inclusion of a hydrophobic oligomer with the hydrophylic oligomer. Although satisfactory adhesion can be achieved by this means, the use of a hydrophobic oligomer has the disadvantage of increasing the cost of the coatings, and the range of compatible hydrophobic oligomers which can be used in aqueous compositions is limited leading to formulation problems.

According to the present invention there are provided ionomeric urethane acrylates and methacrylates including units derived from an isocyanurate.

The invention further provides radiation curable compositions comprising an ionomeric urethane acrylate or methacrylate containing units derived from an isocyanurate and water.

The ionomeric nature of acrylates and methacrylates in accordance with the present invention has provided aqueous solubility over wide concentration ranges, thereby enabling compositions containing them to contain and be diluted with water, and apparatus with which they have been used to be cleaned with water without the necessity for organic solvents. The presence of groups derived from an isocyanurate in general provides acrylates and methacrylates in accordance with the present invention, and compositions containing them, with good adhesion to polyvinyl chloride following radiation curing. Compositions in accordance with the present invention can therefore be formulated to enable them to be diluted with water, and the cured compositions not only have shown good adhesion to polyvinyl chloride substrates but good flexibility and weatherability. In addition, compositions in the form of inks have shown good dot formation when applied to substrates by screen printing.

The ionomeric nature of acrylates and methacrylates in accordance with the present invention is preferably imparted by the presence of quaternary ammonium groups. These groups are in general present as a result of quaternizing amino functionality, preferably tertiary amine functionalilty, introduced into the urethane acrylates and methacrylates during formation of the urethane functionality, e.g. by reacting a poly-isocyanate with an alcohol including amino functionality. This amine functionality can be present in a variety of alcohols, for example in a polyol used to oligomerize the poly-isocyanate or in a monohydric alcohol including amino groups which can be used to increase the relative proportion of ionomeric functionality in the urethanes.

The amount of amine functionality in the ionomers of the present invention is preferably such that before quaternization the urethanes have an amine value of from 20 to 200mg KOH/g, more preferably from 20 to 80mg KOH/g.

The quaternary ammonium groups can be formed by neutralizing the corresponding urethane acrylate or methacrylate containing amino functionality with an organic or inorganic acid. Organic acids, e.g. carboxylic acids, including ethylenic unsaturation are preferred, for example acrylic, methacrylic or maleic acids.

It is preferred that at least 40 percent of the amine functionality of the urethanes is quaternized in order to impart solubility thereto, more preferably from 85 to 95 percent, and advantageously about 90 percent.

Polyols including amine functionality which can be used to produce urethane groups of urethane acrylates and methacrylates in accordance with the present invention, and of course amine functionality, are preferably poly-(mono-hydroxyalkyl) tertiary amines. Examples of such amines which can be used include N-methyl-N,N-diethanolamine, N,N,N-tri-ethanolamine, N,N,N',N'-tetrakis-(2-hydroxyethyl) ethylenediamine, N,N,N',N'-tetrakis-(2-hydroxypropyl) ethylenediamine, N,N',N'-tris-(2-hydroxyethyl)-N-tallow-1,3-diaminopropane, ethylene oxide, propylene oxide and caprolactone extended derivatives of such amines, and mixtures of such amines and/or extended derivatives thereof.

Urethanes in accordance with the present invention preferably include groups derived from at least one tertiary mono-(hydroxyalkyl)amine, such amines when quaternized generally serving to increase the water solubility of the ionomers. Examples of tertiary mono-(hydroxyalkyl)amines which can be used include N,N-dimethylethanolamine, N,N-diethylethanolamine, N,N-dipropylethanolamine, 3-hydroxy-1-methylpiperidine, 4-(2-hydroxyethyl)morpholine, 1-(2-hydroxyethyl)-2-pyrrolidone, ethylene oxide, propylene oxide and caprolactone extended derivatives of such amines, and mixtures of such amines and/or extended derivatives thereof.

As with the amine functionality, the groups derived from an isocyanurate are preferably formed by reacting the poly-isocyanate with an isocyanurate including one or more hydroxy groups, these hydroxy groups reacting with isocyanate groups of the poly-isocyanate to form urethane groups of the urethane acrylates and methacrylates of the present invention. Examples of isocyanurates which can be used include tris-(2-hydroxyethyl) isocyanurate and tris-(2-hydroxypropyl) isocyanurate, ethylene oxide, propylene oxide and caprolactone extended derivatives of such isocyanurates, and mixtures of such isocyanurates and/or extended derivatives thereof.

The poly-isocyanate from which urethanes in accordance with the present invention are derived, usually a di-isocyanate, is preferably an aliphatic poly-isocyanate since these usually result in urethanes having lower viscosities than do urethanes derived from aromatic poly-isocyanates. The aliphatic poly-isocyanates may, however, include aromatic groups. Examples of poly-isocyanates which can be used include xylylene di-isocyanate, 1-isocyanato-3-isocyanato-methyl-3,5,5-(tri-methyl)cyclohexane, 3,3'-(di-methyl)diphenylmethane-4,4'-di-isocyanate, 2,4-tolylene di-isocyanate, 2,6-tolylene di-isocyanate, 2,2,4-(trimethyl)hexamethylene di-isocyanate, 2,4,4-(tri-methyl)hexamethylene di-isocyanate, methylene-bis-4-(cyclo-hexyl)isocyanate, 1,1-hexamethylene di-isocyanate, 1,1-octamethylene di-isocyanate, meta-(tetra-methyl)xylene di-isocyanate, para-(tetra-methyl)xylene di-isocyanate, 1,5-naphthylene di-isocyanate, meta-phenylene di-isocyanate, and mixtures thereof.

The acrylic and/or methacrylic functionality of ionomeric urethanes in accordance with the present invention is preferably introduced by reaction of the poly-isocyanate with a hydroxy acrylate or hydroxy methacrylate, preferably a hydroxyalkyl acrylate or hydroxyalkyl methacrylate, e.g. 2-hydroxyethyl acrylate, 2-hydroxyalkyl methacrylate, hydroxypropyl acrylate, hydroxypropyl methacrylate, hydroxybutyl acrylate, hydroxybutyl methacrylate, and mixtures of two or more thereof.

As will be appreciated by those skilled in the art, reaction of the poly-isocyanate with the various hydroxy group containing compounds to form urethane groups will in general be effected in the presence of a catalyst for the reaction, for example di-butyl tin di-laurate. The reaction is also preferably effected in the presence of a free radical inhibitor, for example phenothiazine, 2,6-di-(tert-butyl)-4-methylphenol, 4-methoxyphenol or hydroquinone.

If desired, a water soluble or partially water soluble ethylenically unsaturated monomer can be present during one or more of the various reactions described above, such monomers then being present in admixture with the ionomeric urethane in accordance with the present invention.

Ionomeric urethane acrylates and methacrylates in accordance with the present invention are preferably prepared by reacting the various reactants in the following series of reaction steps.

In an initial step of the preferred series of steps, a poly-isocyanate is partially reacted with a mono-hydroxy acrylate, optionally in the presence of a tertiary amine including only one N-(mono-hydroxyalkyl) group, the relative amounts of the reactants present during this step preferably being such that from 45 to 55 percent, and more preferably about 50 percent, of the isocyanate groups in the poly-isocyanate remain unreacted. This reaction step is preferably effected in the presence of a free radical inhibitor and a catalyst. If desired, a hydrophillic ethylenically unsaturated monomer can also be present as a diluent during this reaction step.

In a second reaction step, the product of this reaction is reacted with at least one poly-(hydroxyalkyl) tertiary amine in the presence of a polyol containing an isocyanaurate ring, the ratio of amine to isocyanurate preferably being from 1:2 to 2:1, more preferably from 0.8:1.0 to 1.2:1.0, based on the equivalents of hydroxy groups present in the respective compounds. The amount of such hydroxy group containing compounds which are used is preferably such that substantially none of the isocyanate groups of the original poly-isocyanate remain when the reaction is complete.

Compositions in accordance with the present invention will include at least one urethane ionomer in accordance with the present invention in admixture with water. In addition, compositions in accordance with the present invention can include other components, for example depending on the type of composition and the intended method of curing.

Compositions in accordance with the present invention can be in a variety of forms, varnish compositions and inks being particularly preferred. Ink compositions will, of course, include one or more pigments in addition to any other materials which may be present in the compositions.

Although compositions in accordance with the present invention can be formulated for curing by electron beam, they are preferably formulated to be curable using actinic radiation, for example ultra violet light. Compositions which are curable using actinic radiation will usually include a free radical initiator, for example benzophenone, benzoin methyl ether, an acyl phosphine oxide, thioxanthone, or a derivative of one or more thereof. The amount of free radical initiator used is preferably from 2 to 10 percent by weight of the composition.

In order to increase the speed of curing of compositions in accordance with the present invention which include a Norrish Type II photoinitiator, it is generally preferred to include an amine synergist which can be a liquid or a solid. Preferred amine synergists include solid aminobenzoates, for example alkyl 4-(di-alkylamino)benzoates in which the alkyl groups of the di-alkylamino groups are selected from methyl, ethyl or propyl groups, e.g. ethyl 4-(di-ethylamino)benzoate. The amount of amine synergist present is preferably from 2 to 10 percent by weight of the composition.

The coating lay and flow of compositions in accordance with the present invention can usually be improved by the inclusion of a surfactant which can also serve to reduce foaming of the compositions. Examples of surfactants which can be used include silicones and/or modified silicone fluids, for example polymethylsiloxanes, and oil-based defoamers. It is usually preferred to include up to 15 percent by weight of surfactant based on the weight of the compositions.

Compositions in accordance with the present invention can, if desired, include one or more fillers, for example to modify the viscosity of the compositions, e.g. to increase their coating thixotropy, or to modify the gloss of cured coatings produced therefrom. Examples of fillers which can be used include powders of silica, magnesium silicate, calcium carbonate or modified clays. It is usually preferred to include up to 15 percent by weight of filler based on the weight of the compositions.

Compositions in accordance with the present invention preferably include at least one ethylenically unsaturated monomer. Examples of such monomers include acrylic monomers, which can include one or more unsaturated groups, e.g. straight or branched chain alkyl acrylates including iso-bornyl acrylate, iso-decyl acrylate, octadecyl acrylate, lauryl acrylate, stearyl acrylate and hexanediol di-acrylate; polyether di-acrylates, e.g. having four ethyleneoxy groups, and including alkyleneoxy di-acrylates, e.g. tri-ethylene-glycol di-acrylate; acrylates of triols and alkoxy-extended triols, e.g. trimethylolpropane triacrylate and glyceryl triacrylate; and N-methylolacrylamide. The compositions preferably include from 5 to 35 percent by weight of ethylenically unsaturated monomers based on the weight of the compositions.

Compositions in accordance with the present invention preferably include a viscosity modifier in addition to any surfactant and/or filler which may be present, in particular to reduce the viscosity of, or thin, the compositions. Examples of viscosity modifiers which can be used include N-vinyl-2-pyrrolidone and N-vinylcaprolactam, the latter usually being used in admixture with one or more liquid ethylenically unsaturated monomers since it is a solid at ambient temperatures. The preferred amount of viscosity modifier is up to 15 percent by weight of the compositions.

The following Examples are given by way of illustration only. All parts are by weight based on the total weight of the mixture concerned, unless indicated otherwise.

Example 1

310g of tetra-methylxylene di-isocyanate, 163g of ethoxylated trimethylolpropane triacrlyate, 4.5g of 2,6-di-(tert-butyl)-4-methylphenol and 0.92g of di-butyl tin di-laurate (DBTD) were charged to a four-necked reaction flask fitted with a thermometer, condenser, air sparge inlet and provision for mechanical agitation, the flask being placed in an electric heating mantle.

The contents of the flask were agitated with heating and air sparging, and the temperature of the contents of the flask was raised and held at 40 to 50°C whilst 29.04g of 2-(di-methylamino)ethanol were added in six equal portions over a 30 minute period. Immediately thereafter, 317g of caprolactone-extended 2-hydroxyethyl acrylate (Tone M100) were added to the mixture in six equal portions over a period of one hour. The temperature of the mixture was then held at 55 to 60°C for 3 hours with agitation and air sparging.

After this period of time, 48.3g of N,N,N',N'-tetrakis-(2-hydroxypropyl) ethylenediamine (Quadrol L - ex BASF) were added, followed by 51.47g of tris-(2-hydroxyethyl) isocyanurate. The temperature of the mixture was raised to 85 to 90°C and held in this range until the mixture was free of isocyanate groups as determined by infra red analysis. The amine value of the product at this stage was 39.8mg KOH/g.

At this point, 21.47g of acrylic acid and 17.29g of maleic acid were added, this being sufficient to neutralize 90 percent of the basic sites in the reaction product. After neutralization, 41.64g of surfactant (Synperonic NP13 - ex ICI) were added to increase the water miscibilty of the product.

Example 2

328g of tri-methylhexamethylene di-isocyanate, 221g of ethoxylated trimethylolpropane triacrlyate, 5.5g of 2,6-di-(tert-butyl)-4-methylphenol and 1.1g of di-butyl tin di-laurate (DBTD) were charged to a four-necked reaction flask fitted with a thermometer, condenser, air sparge inlet and provision for mechanical agitation, the flask being placed in an electric heating mantle.

The contents of the flask were agitated with heating and air sparging, and the temperature of the contents of the flask was raised and held at 45 to 50°C whilst 37.18g of 2-(di-methylamino)ethanol were added in six equal portions over a 30 minute period. Immediately thereafter, 394g of caprolactone-extended 2-hydroxyethyl acrylate (Tone M100) were added to the mixture in six equal portions over a period of one hour. The temperature of the mixture was then held at 55 to 60°C for 3 hours with agitation and air sparging.

After this period of time, 61.1g of N,N,N',N'-tetrakis-(2-hydroxypropyl) ethylenediamine (Quadrol L - ex BASF) were added, followed by 63.3g of tris-(2-hydroxyethyl) isocyanurate. The temperature of the mixture was raised to 85 to 90°C and held in this range until the mixture was free of isocyanate groups as determined by infra red analysis. The amine value of the product at this stage was 42.4mg KOH/g.

At this point, 27.07g of acrylic acid and 20.77g of maleic acid were added, this being sufficient to neutralize 90 percent of the basic sites in the reaction product. After neutralization, 46.6g of surfactant (Synperonic NP13 - ex ICI) were added to increase the water miscibilty of the product.

## Example 3

378.12g of tri-methylhexamethylene di-isocyanate, 170g of ethoxylated trimethylolpropane triacrlyate, 5.0g of 2,6-di-(tert-butyl)-4-methylphenol and 1.1g of di-butyl tin di-laurate (DBTD) were charged to a four-necked reaction flask fitted with a thermometer, condenser, air sparge inlet and provision for mechanical agitation, the flask being placed in an electric heating mantle.

The contents of the flask were agitated with heating and air sparging, and the temperature of the contents of the flask was raised and held at 45 to 50°C whilst 35.41g of 2-(di-methylamino)ethanol were added in six equal portions over a 30 minute period. Immediately thereafter, 162.72g of 2-hydroxyethyl acrylate were added to the mixture in six equal portions over a period of one hour. The temperature of the mixture was then held at 55 to 60°C for 3 hours with agitation and air sparging.

After this period of time, 87.42g of tris-(2-hydroxyethyl) isocyanurate were added, followed by 58.18g of N,N,N',N'-tetrakis-(2-hydroxypropyl) ethylenediamine (Quadrol L - ex BASF). The temperature of the mixture was raised to 85 to 90°C and held in this range until the mixture was free of isocyanate groups as determined by infra red analysis. The amine value of the product at this stage was 53.7mg KOH/g.

At this point, 25.78g of acrylic acid and 20.77g of maleic acid were added, this being sufficient to neutralize 90 percent of the basic sites in the reaction product. After neutralization, 40.8g of surfactant (Synperonic NP13 - ex ICI) were added to increase the water miscibilty of the product.

## Example 4

533g of tetra-methylxylene di-isocyanate, 280g of ethoxylated trimethylolpropane triacrlyate, 6.13g of 2,6-di-(tert-butyl)-4-methylphenol and 1.22g of di-butyl tin di-laurate (DBTD) were charged to a four-necked reaction flask fitted with a thermometer, condenser, air sparge inlet and provision for mechanical agitation, the flask being placed in an electric heating mantle.

The contents of the flask were agitated with heating and air sparging, and the temperature of the contents of the flask was raised and held at 45 to 50°C whilst 46.84g of 2-(di-methylamino)ethanol were added in six equal portions over a 30 minute period. Immediately thereafter, 192.3g of 2-hydroxyethyl acrylate were added to the mixture in six equal portions over a period of one hour. The temperature of the mixture was then held at 55 to 60°C for 3 hours with agitation and air sparging.

After this period of time, 98.5g of tris-(2-hydroxyethyl) isocyanurate were added, followed by 76.95g of N,N,N',N'-tetrakis-(2-hydroxypropyl) ethylenediamine (Quadrol L - ex BASF). The temperature of the mixture was raised to 85 to 90°C and held in this range until the mixture was free of isocyanate groups as determined by infra red analysis. The amine value of the product at this stage was 47.8mg KOH/g.

At this point, 34.1g of acrylic acid and 27.5g of maleic acid were added, this being sufficient to neutralize 90 percent of the basic sites in the reaction product. After neutralization, 46.7g of surfactant (Synperonic NP13 - ex ICI) were added to increase the water miscibilty of the product.

## Example 5 (Comparison)

307.64g of tetra-methylxylene di-isocyanate, 170g of ethoxylated trimethylolpropane triacrlyate, 5g of 2,6-di-(tert-butyl)-4-methylphenol and 0.42g of di-butyl tin di-laurate (DBTD) were charged to a four-necked reaction flask fitted with a thermometer, condenser, air sparge inlet and provision for mechanical agitation, the flask being placed in an electric heating mantle.

The contents of the flask were agitated with heating and air sparging, and the temperature of the contents of the flask was raised and held at 45 to 50°C whilst 216.86g of caprolactone-extended 2-hydroxyethyl acrylate (Tone M100) and 56.1g of 2-(di-methylamino)ethanol were added in six equal portions over a 60 minute and a 30 minute period, respectively. The temperature of the mixture was then held at 55 to 60°C for 3 hours with agitation and air sparging.

After this period of time, 92.17g of N,N,N',N'-tetrakis-(2-hydroxypropyl) ethylenediamine (Quadrol L - ex BASF) were added, and the temperature of the mixture was raised to 85 to 90°C and held in this range until the mixture was free of isocyanate groups as determined by infra red analysis. The amine value of the product at this stage was 83.9mg KOH/g.

At this point, 81.7g of acrylic acid were then added, this being sufficient to neutralize 90 percent of the basic sites in the reaction product. After neutralization, 73.45g of surfactant (Synperonic NP13 - ex ICI) were added to increase the water miscibilty of the product.

## Example 6 (Comparison)

342.2g of tetra-methylxylene di-isocyanate, 170g of ethoxylated trimethylolpropane triacrlyate, 5g of 2,6-di-(tert-butyl)-4-methylphenol and 0.42g of di-butyl tin di-laurate (DBTD) were charged to a four-necked reaction flask fitted with a thermometer, condenser, air sparge inlet and provision for mechanical agitation, the flask being placed in an electric heating mantle.

The contents of the flask were agitated with heating and air sparging, and the temperature of the contents of the flask was raised and held at 45 to 50°C whilst 118.15g of 2-hydroxyethyl acrylate and then 54.4g of 2-(di-methylamino)ethanol were added portionwise over a 30 minute period. The temperature of the mixture was then held at 55 to 60°C for 3 hours with agitation and air sparging.

After this period of time, 119.1g of N,N,N',N'-tetrakis-(2-hydroxypropyl) ethylenediamine (Quadrol L - ex BASF) were added, and the temperature of the mixture was raised to 85 to 90°C and held in this range until the mixture was free of isocyanate groups as determined by infra red analysis. The amine value of the product at this stage was 99.42mg KOH/g.

At this point, 46.41g of acrylic acid and 37.22g of maleic acid were added, this being sufficient to neutralize 88 percent of the basic sites in the reaction product. After neutralization, 75.43g of surfactant (Synperonic NP13 - ex ICI) were added to increase the water miscibilty of the product.

## Example 7 (Comparison)

274.78g of tetra-methylxylene di-isocyanate, 100.96g of ethoxylated trimethylolpropane triacrlyate, 5g of 2,6-di-(tert-butyl)-4-methylphenol and 0.42g of di-butyl tin di-laurate (DBTD) were charged to a four-necked reaction flask fitted with a thermometer, condenser, air sparge inlet and provision for mechanical agitation, the flask being placed in an electric heating mantle.

The contents of the flask were agitated with heating and air sparging, and the temperature of the contents of the flask was raised and held at 45 to 50°C. 42.96g of 2-(di-methylamino)ethanol were then added portionwise over a 30 minute period, followed by 221.44g of caprolactone-extended 2-hydroxyethyl acrylate (Tone M100) added portionwise over a 60 minute period. The temperature of the mixture was then held at 55 to 60°C for 3 hours with agitation and air sparging.

After this period of time, 120.31g of N,N',N'-polyoxyethylene(10)-N-tallow-1,3-diaminopropane (Ethoduomen T/20 -ex Akzo) and 47.02g of N,N,N',N'-tetrakis-(2-hydroxypropyl) ethylenediamine (Quadrol L - ex BASF) were added, and the temperature of the mixture was raised to 85 to 90°C and held in this range until the mixture was free of isocyanate groups as determined by infra red analysis. The amine value of the product at this stage was 77.0mg KOH/g.

At this point, 16.22g of acrylic acid and 45.76g of maleic acid were added, this being sufficient to neutralize 90 percent of the basic sites in the reaction product. After neutralization, 81.3g of surfactant (Synperonic NP13 - ex ICI) were added to increase the water miscibilty of the product.

## Example 8

A series of radiation curable screen printing inks was prepared by mixing varnishes derived from each of the previous Examples with a pigment and a thinner to modify the viscosity of the resultant inks.

Varnish compositions A-E were prepared by high speed mixing 34.50g of the neutralized products of Examples 1-5, respectively, with 41.5g of water, 2.3g of iso-propyl thioxanthone as photoinitiator, 3.0g of ethyl 4-dimethylaminobenzoate as an amine synergist, 2.5g of surfactant (F111/300 - ex Dow Corning), 7.5g of silica (Aerosil 200) as a filler, and 8.7g of ethoxylated trimethylol propane triacrylate as an acrylate monomer.

Trichromatic sets of pigment compositions A-E were also prepared by mixing one of the neutralized products of Examples 1 to 5 as solutions in water containing 80 percent by weight of the particular neutralized product.

Table 1

|  | Magenta | Yellow | Cyan | Black |
|---|---|---|---|---|
| Neutralized product of one of Examples 1-5 | 40.8 | 36.8 | 44.0 | 44.0 |
| Magenta pigment | 25.1 | - | - | - |
| Yellow pigment | - | 25.2 | - | - |
| Cyan pigment | - | - | 25.5 | - |
| Black pigment | - | - | - | 25.5 |
| Water | 31.7 | 36.8 | 14.6 | 14.6 |
| Surfactant | 2.4 | 1.2 | 1.3 | 1.3 |
| Acrylated monomer | - | - | 14.6 | 14.6 |

In Table 1:-
Magenta pigment (Irgalite Magenta TCB ex ICI)
Yellow pigment (Irgazin Yellow 3R ex ICI)
Cyan pigment (Sanorin Blue 2GLS ex Sandoz)
Black pigment (Printex 30 ex Degussa)
Surfactant (Synperonic NP13 ex ABM Chemicals)

Sixteen screen printing inks were produced by mixing the respective varnish compositions A-E with one of the correspondingly designated pigment compositions A-E in a volume ratio of varnish to pigment composition of 86:14.

In order to adjust the viscosity of the resulting inks, 15 percent of one or the other of two thinners was added to each ink.

Thinner Y consisted of the following mixture:-

| N-vinyl caprolactam | (45 parts) |
|---|---|
| tripropyleneglycol di-acrylate | (45 parts) |
| di-(trimethylol)propane tetra-acrylate | (10 parts) |

Thinner Z:-

| N-vinyl-2-pyrrolidone | (100 parts) |
|---|---|

Each thinned ink within a trichromatic set and thinned with a particular thinner was then machine screen printed on to polyvinyl chloride sheets using a polyurethane squeegee material and a half-tone dot stencil to produce a series of four-color prints. The finished four-color prints were then assessed for dot formation, flexibility, adhesion and weatherability. The results of the tests for the trichromatic sets with thinners Y and Z are given in Tables 2 and 3, respectively.

Example 9 (Comparison)

Ink compositions are prepared as described in Example 8 using the products of comparison Examples 6 and 7. The results are similar to those obtained in Example 8 for the inks including the product of Example 5.

Table 2

| | | | P | Q | R | S | T | U |
|---|---|---|---|---|---|---|---|---|
| A | | Magenta | 2 | 3 | 2 | 3 | 3 | 2 |
| | | Yellow | 2 | 3 | 2 | 3 | 3 | 2 |
| | | Cyan | 2 | 3 | 2 | 3 | 3 | 2 |
| | | Black | 2 | 3 | 2 | 3 | 3 | 2 |
| B | | Magenta | 2 | 3 | 2 | 3 | 3 | 2 |
| | | Yellow | 2 | 3 | 2 | 3 | 3 | 2 |
| | | Cyan | 2 | 3 | 2 | 3 | 3 | 2 |
| | | Black | 2 | 3 | 2 | 3 | 3 | 2 |
| C | | Magenta | 2 | 3 | 2 | 2 | 2 | 2 |
| | | Yellow | 2 | 3 | 2 | 2 | 2 | 2 |
| | | Cyan | 2 | 3 | 2 | 2 | 2 | 2 |
| | | Black | 2 | 3 | 2 | 2 | 2 | 2 |
| D | | Magenta | 2 | 3 | 1 | 2 | 2 | 3 |
| | | Yellow | 2 | 3 | 1 | 2 | 2 | 3 |
| | | Cyan | 2 | 3 | 1 | 2 | 2 | 3 |
| | | Black | 2 | 3 | 1 | 2 | 2 | 3 |
| E | | Magenta | 1 | 1 | 2 | 3 | 3 | 1 |
| | | Yellow | 1 | 1 | 2 | 3 | 3 | 1 |
| | | Cyan | 1 | 1 | 2 | 3 | 3 | 1 |
| | | Black | 1 | 1 | 2 | 3 | 3 | 1 |

Key:- P = adhesion; Q = weatherability; R = flexibility;
S = water wash; T = dot formation; U = cure speed
1 = poor; 2 = good; 3 = excellent

Table 3

|   |   | P | Q | R | S | T | U |
|---|---|---|---|---|---|---|---|
|   | Magenta | 2 | 3 | 2 | 3 | 3 | 2 |
| A | Yellow | 2 | 3 | 2 | 3 | 3 | 2 |
|   | Cyan | 2 | 3 | 2 | 3 | 3 | 2 |
|   | Black | 2 | 3 | 2 | 3 | 3 | 2 |
|   | Magenta | 2 | 3 | 2 | 3 | 3 | 2 |
| B | Yellow | 2 | 3 | 2 | 3 | 3 | 2 |
|   | Cyan | 2 | 3 | 2 | 3 | 3 | 2 |
|   | Black | 2 | 3 | 2 | 3 | 3 | 2 |
|   | Magenta | 2 | 3 | 2 | 2 | 2 | 2 |
| C | Yellow | 2 | 3 | 2 | 2 | 2 | 2 |
|   | Cyan | 2 | 3 | 2 | 2 | 2 | 2 |
|   | Black | 2 | 3 | 2 | 2 | 2 | 2 |
|   | Magenta | 2 | 3 | 1 | 2 | 2 | 3 |
| D | Yellow | 2 | 3 | 1 | 2 | 2 | 3 |
|   | Cyan | 2 | 3 | 1 | 2 | 2 | 3 |
|   | Black | 2 | 3 | 1 | 2 | 2 | 3 |
|   | Magenta | 1 | 1 | 2 | 3 | 3 | 1 |
| E | Yellow | 1 | 1 | 2 | 3 | 3 | 1 |
|   | Cyan | 1 | 1 | 2 | 3 | 3 | 1 |
|   | Black | 1 | 1 | 2 | 3 | 3 | 1 |

Key:- P = adhesion; Q = weatherability; R = flexibility;
S = water wash; T = dot formation; U = cure speed
1 = poor; 2 = good; 3 = excellent

## Claims

1. Ionomeric urethane acrylates and methacrylates including units derived from at least one isocyanurate.

2. Urethanes according to claim 1, including quaternary ammonium groups.

3. Urethanes according to claim 2, wherein the quaternary ammonium groups are tertiary amino groups in the urethane moiety thereof quaternized with an ethylenically unsaturated carboxylic acid.

4. Urethanes according to claim 3, wherein the carboxylic acid comprises acrylic acid or maleic acid.

5. Urethanes according to any of claims 2 to 5, having an amine value of from 20 to 200mg KOH/g before quaternization.

6. Urethanes according to claim 5, wherein the amine value is from 20 to 80mg KOH/g.

7. Urethanes according to any of claims 2 to 6, wherein at least 50 percent of any amine functionality thereof is quaternized.

8. Urethanes according to claim 7, wherein from 85 to 95 percent of any amine functionality thereof is quaternized.

9. Urethanes according to claim 8, wherein about 90 percent of any amine functionality thereof is quaternized.

10. A process for the preparation of inomeric urethane acrylates and methacrylates which comprises
    (a) reacting a poly-isocyanate with a mono-hydroxyalkyl acrylate or mono-hydroxyalkyl methacrylate, optionally in the presence of a mono-(hydroxyalkyl) tertiary amine;
    (b) reacting the product with a poly-(hydroxyalkyl) tertiary amine and a polyol containing an isocyanurate ring; and
    (c) quaternizing the product with an acid.

11. A process according to claim 10, wherein step (a) is effected to react from 45 to 55 percent of the isocyanate groups present in the poly-isocyanate.

12. A process according to claim 11, wherein about 50 percent of the isocyanate groups are reacted.

13. A process according to any of claim 10 to 12, wherein step (b) is effected to react substantially all of the isocyanate groups present in the original poly-isocyanate.

14. A process according to any of claims 10 to 13, wherein the ratio of equivalents of hydroxy groups in the poly-(hydroxyalkyl) tertiary amine and the polyol containing an isocyanurate ring is from 1:2 to 2:1.

15. A process according to claim 14, wherein the said ratio is from 0.8:1 to 1.2:1.

16. A process according to any of claim 10 to 15, wherein the quaternization in step (c) is effected to quaternize at least 50 percent of the tertiary amine functionality of the product from step (b).

17. A process according to claim 16, wherein from 85 to 95 percent of the amine functionality is quaternized.

18. A process according to any of claims 10 to 17, wherein the quaternization is effected using an unsaturated carboxylic acid.

19. A radiation curable composition comprising an ionomeric urethane acrylate or methacrylate and water.

20. A composition according to claim 19, in the form of an ink or a varnish.

21. A composition according to either of claims 19 and 20, including a thinner.

22. A composition according to claim 21, wherein the thinner comprises N-vinylcaprolactam.